# FASCICULE DE BREVET EUROPEEN

(11) **EP 1 303 885 B1**
(45) Date de publication et mention de la délivrance du brevet: **11.06.2014**
(21) Numéro de dépôt: 01958157.8
(22) Date de dépôt: 23.07.2001
(51) Int. Cl.: H01M 8/02, H01M 4/96, H01B 1/24

(54) **MATERIAU COMPOSITE CONDUCTEUR ET ELECTRODE POUR PILE A COMBUSTIBLE UTILISANT CE MATERIAU MIS EN FORME PAR THERMO-COMPRESSION**
LEITFÄHIGES VERBUNDMATERIAL UND AUS DIESEM MATERIAL MITTELS THERMO-KOMPRESSION GEFORMTE BRENNSTOFFZELLENELEKTRODE
CONDUCTIVE COMPOSITE MATERIAL AND ELECTRODE FOR FUEL CELL USING SAID MATERIAL FORMED BY THERMO-COMPRESSION

(30) Priorité: 24.07.2000 FR 0009666
(43) Date de publication de la demande: 23.04.2003
(73) Titulaire: Commissariat à l'Énergie Atomique et aux Énergies Alternatives, 75015 Paris (FR)
(72) Inventeur: BAURENS, Pierre, F-38500 COUBLEVIE (FR); BOURGEOISAT, Eric, F-37300 JOUE LES TOURS (FR); JOUSSE, Franck, F-37000 TOURS (FR); SALAS, Jean-Felix, F-37250 MONTBAZON (FR)
(74) Mandataire: Ilgart, Jean-Christophe
(86) Numéro de dépôt international: PCT/FR2001/002392
(87) Numéro de publication internationale: WO 2002/009219

(56) Documents cités:
- EP-A- 0 268 397
- EP-A- 0 415 733
- EP-A- 0 774 337
- EP-A- 0 805 463
- EP-A- 0 935 303
- US-A- 4 366 205
- US-A- 4 704 231

## Description

### Domaine technique

La présente invention concerne un matériau composite conducteur et son procédé de fabrication. Elle concerne aussi une électrode pour pile à combustible et un procédé de fabrication d'une telle électrode.

### Etat de la technique antérieure

Les matériaux composites électriquement conducteurs sont constitués de particules conductrices dispersées dans une matrice organique. Le seuil de conduction électrique, ou seuil de percolation (transition de l'état isolant à l'état conducteur), est atteint lorsque les particules conductrices forment un réseau de chemins conducteurs connectés sur tout le volume du matériau composite.

Les particules conductrices peuvent être métalliques, ce qui présente l'avantage d'une bonne conductivité électrique. Elles ont cependant l'inconvénient de posséder une densité élevée et d'être sensibles à l'environnement chimique de la pile. Les particules conductrices non métalliques sont particulièrement intéressantes pour leur faible densité et pour leur résistance chimique. Les charges conductrices non métalliques les plus utilisées sont les produits pulvérulents à base de carbone, tels que les poudres de noir de carbone ou de graphite et les fibres de carbone.

Suivant la morphologie des particules (rapport de forme, surface spécifique), le seuil de percolation est atteint pour des taux de charges de quelques % volumique pour des fibres et de 20% à 30% volumique pour des sphères. Ces charges permettent typiquement d'obtenir des conductivités dans le volume du matériau de l'ordre de 10⁻⁵ à 10⁻¹ S/cm. On constate ainsi que la conductivité des matériaux composites est très inférieure à celle des charges utilisées (de l'ordre de 1000 S/cm pour le graphite) bien que les taux de charges soient supérieurs au seuil de percolation. Cet effet s'explique par les importantes résistances de contact entre particules adjacentes. Ces résistances sont liées d'une part à la faible surface de contact entre deux particules (résistance de constriction) et, d'autre part, à la formation d'un film isolant à la surface des charges lors de leur dispersion dans le liant organique (résistance tunnel).

La résistance de constriction est définie par la relation R_{cr}= ρᵢ/d où ρᵢ représente la résistivité de la charge et d le diamètre de la surface de contact entre les grains. La surface de recouvrement des charges est contrôlée par leur géométrie ainsi que par leurs propriétés viscoélastiques, c'est-à-dire leur aptitude à se déformer sous contrainte.

La résistance tunnel est associée à tout film isolant pouvant recouvrir la surface des particules. Il peut s'agir de tensio-actifs adsorbés ou plus simplement de la matrice organique qui enrobe les charges une fois qu'elles y sont dispersées. Dans cette configuration, le mécanisme de conduction entre grains conducteurs n'est plus ohmique mais s'effectue par sauts électroniques entre particules isolées. En raison des faibles propriétés de transport électronique des polymères, le champ électrique local entre grains conducteurs nécessaire pour parvenir à la circulation d'un courant électrique dans la totalité des amas conducteurs constitués par les charges doit être très important. Pratiquement, le champ électrique local n'est jamais suffisant pour permettre un saut électronique entre chaque particule connectée mais isolée par un film de polymère. Seule une faible partie des chemins conducteurs est sollicitée et participe réellement à la circulation du courant. La conductivité macroscopique est fortement réduite. La résistance tunnel est définie par la relation Rₜ=ρₜ/a où ρₜ représente la résistivité tunnel, liée à l'épaisseur du film et aux propriétés électriques de la matrice organique isolante, et où a quantifie l'aire de contact.

La résistance à l'interface entre deux particules est la somme des résistances de constriction et tunnel. Dans la grande majorité des cas, la résistance tunnel gouverne la conductivité macroscopique des milieux hétérogènes. En effet, la résistance tunnel passe de 10⁻⁸ à 10³ Ω . cm lorsque l'épaisseur du film isolant recouvrant les particules conductrices en contact varie de 0,5 à 12 nm. Cette épaisseur d'isolation de quelques nanomètres correspond classiquement à la couche de matrice polymérique adsorbée à la surface des charges lors de la dispersion.

Les piles à combustible à membrane polymère actuellement développées font appel à des plaques séparatrices de type bipolaire. Dans un assemblage complet constitué d'une succession de cellules électrochimiques, ces plaques bipolaires ont pour fonction de séparer les électrodes anodiques et cathodiques, de permettre la distribution des gaz hydrogène et oxygène, respectivement à la cathode et à l'anode, de collecter le courant électrique produit et dans certains cas de permettre le refroidissement de la cellule.

Les matériaux constituant ces plaques séparatrices bipolaires doivent satisfaire les critères suivants :
- fortes conductivités surfacique et volumique, au moins supérieures à 10 S/cm,
- imperméabilité aux gaz hydrogène et oxygène,
- résistance mécanique élevée,
- résistance chimique dans l'environnement acide de la cellule électrochimique, une éventuelle dégradation des matériaux de plaque bipolaire ne devant pas entraîner de pollution de la cellule électrochimique.

Ces matériaux doivent être mis en forme pour constituer des plaques à la surface desquelles sont réalisés des canaux de distribution de gaz. Les techniques de mise en oeuvre et les coûts des plaques bipolaires doivent rester compatibles avec les contraintes de la production automobile.

Actuellement, les plaques bipolaires sont réalisées à partir de plaques de graphite usinées ou de plaques de métal embouties et non corrodables (acier inoxydable ou aluminium recouvert de titane). Les solutions mettant en oeuvre du graphite usiné s'avèrent coûteuses et difficilement compatibles avec une production en grande série. Les solutions mettant en oeuvre des particules métalliques conduisent à des plaques relativement lourdes.

Une voie d'amélioration est la réalisation de plaques séparatrices bipolaires directement par moulage de composites conducteurs.

Les principes généraux exposés ci-dessus suggèrent que la réalisation de matériaux composites très conducteurs nécessite de mettre en oeuvre, par les techniques classiques de transformation des polymères, des matériaux très chargés en éléments conducteurs afin, d'une part, d'augmenter le nombre de contacts entre particules conductrices et, d'autre part, d'augmenter les surfaces de contact entre éléments adjacents.

Ces principes ont été repris dans le cadre du développement d'éléments de poids réduit pour pile à combustible et ont notamment abouti au dépôt des demandes de brevets EP-A-0 774 337, WO-A-96/12309, EP-A-0 933 825 et WO-A-98/53514.

La demande EP-A-0 774 337 divulgue un procédé de fabrication de corps moulés par extrusion de matière plastique chargée à plus de 50% en volume (de préférence entre 65 et 90%) en éléments conducteurs (graphite lamellaire ou non, fibres conductrices...). Au départ, le mélange des constituants est réalisé dans un malaxeur puis, après avoir été broyé et concassé, le mélange est extrudé sous forme de plaque ou de tube. Les matériaux composites obtenus sont réalisés à partir de tout type de charges conductrices disponibles dans le commerce.

Le document WO-A-96/12309 divulgue la réalisation d'un empilement pour pile à combustible, utilisant un matériau composite conducteur obtenu par mélange thermo-compressé de graphite lamellaire et de résine fluoré (PTFE). Le matériau composite obtenu par ce procédé est non poreux et directement moulable par compression. La structure du matériau composite conducteur et la nature des charges ne sont pas optimisées pour maîtriser l'imperméabilité aux gaz ainsi que le refroidissement de la cellule. Il est nécessaire de déposer un matériau barrière en surface pour étanchéiser l'ensemble.

Le document EP-A-0 933 825 divulgue un procédé de fabrication de plaques réparatrices pour pile à combustible à base d'un liant thermodurcissable (résine phénolique et époxyde) chargé en graphite lamellaire ou non. Le mélange est thermo-compressé dans un moule à la géométrie des plaques séparatrices à réaliser. La porosité, et donc en première approximation l'imperméabilité aux gaz, est optimisée en favorisant l'évacuation de l'eau et des gaz formés lors de la réticulation. Toutefois, une couche isolante de résine recouvre la surface des plaques et doit être éliminée par décapage.

Le document WO-A-98/53514 divulgue un procédé de fabrication par thermo-compression de plaques séparatrices bipolaires contenant de 50 à 95% de charges conductrices dans différents thermoplastiques. Les charges conductrices peuvent être du graphite, du noir de carbone et des fibres de carbone. Le problème de l'imperméabilité aux gaz est contourné par l'ajout d'un agent hydrophile favorisant la migration d'eau dans les pores du matériau. Cette configuration favorise surtout l'évacuation de l'eau produite dans la pile et permet le refroidissement de la cellule.

Le document EP 0 935 303 A divulgue une plaque séparatrice pour pile à combustible. La plaque séparatrice possède une bonne imperméabilité aux gaz. Elle est réalisée en un matériau comprenant du graphite lamellaire et un polymère qui peut être thermoplastique.

### Exposé de l'invention

La présente invention a été conçue pour remédier aux inconvénients cités ci-dessus des matériaux composites conducteurs. Elle permet de procurer des matériaux légers, de résistance électrique de surface très faible et de conductivité thermique optimisée dans la direction parallèle à la surface.

Un premier objet de l'invention est constitué par un matériau composite conducteur constitué d'un mélange fritté à haute pression de graphite lamellaire et de poudre de polymère thermoplastique, le mélange comprenant éventuellement un premier type de graphite lamellaire constitué de lamelles de granulométrie comprise entre 10 et 100 µm et un deuxième type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur, le. mélange comprenant également une poudre de polymère thermoplastique de granulométrie comprise entre 10 et 200 µm, les lamelles et/ou agglomérats ayant leurs plans principaux parallèles entre eux.

De préférence, le premier type de graphite lamellaire est constitué de lamelles de granulométrie comprise entre 20 et 50 µm.

Les agglomérats du deuxième type de graphite lamellaire peuvent être constituées de particules de 5 à 20 µm de côté et de 0,1 à 5 µm d'épaisseur.

De préférence, la poudre de polymère thermoplastique possède une granulométrie inférieure à 50 µm. Ce polymère peut être de type fluoré, comme le PVDF.

Un deuxième objet de l'invention concerne un procédé de fabrication d'un matériau composite conducteur, caractérisé en ce qu'il comprend :
- l'obtention d'un mélange comprenant une poudre de polymère thermoplastique de granulométrie comprise entre 10 et 200 µm, éventuellement un premier type de graphite lamellaire constitué de lamelles de granulométrie comprise entre 10 et 100 µm et un deuxième type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur,
- la mise en forme du matériau composite conducteur par frittage à haute pression du mélange afin que les plans principaux des lamelles et/ou agglomérats soient parallèles entre eux.

Le deuxième type de graphite lamellaire peut être obtenu par broyage, en phase solide ou en phase solvant, suivi d'un tamisage, de feuilles de graphite, une dite feuille de graphite étant constituée de particules de graphite dont les plans principaux sont parallèles au plan de ladite feuille. Ce broyage de feuilles de graphite peut consister à broyer des feuilles de graphite fabriquées par calandrage et/ou laminage de graphite naturel ou expansé.

Le deuxième type de graphite lamellaire peut aussi être obtenu par broyage, en phase solide ou liquide, d'une masse de graphite obtenue par compression, le broyage étant suivi d'un tamisage.

Le deuxième type de graphite lamellaire peut encore être obtenu au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

L'étape de séchage peut être réalisée par filtration du solvant suivie d'un dégazage dans une enceinte sous vide.

Avantageusement, la mise en forme du matériau composite conducteur est effectuée dans un moule. Le frittage peut être effectué à une pression comprise entre 0,25 et 1 tonne /cm².

Selon un mode particulier de mise en oeuvre, le frittage est effectué selon le cycle suivant :
- le mélange est porté à une température légèrement inférieure à la température de fusion du polymère thermoplastique,
- le mélange est compressé graduellement jusqu'à la pression requise pour le frittage,
- le mélange compressé est porté à une température légèrement supérieure à la température de fusion du polymère thermoplastique, pendant une durée déterminée,
- le mélange compressé est ramené à une température inférieure à la température de fusion du polymère thermoplastique, pendant une durée déterminée,
- le mélange fritté est graduellement mis à température ambiante et à pression ambiante.

Un troisième objet de l'invention est constitué par une électrode pour pile à combustible, comprenant des moyens permettant la circulation d'un fluide gazeux à la surface d'au moins l'une de ses faces principales, obtenue par frittage à haute pression d'un mélange de graphite lamellaire et de poudre de polymère thermoplastique, le mélange comprenant éventuellement un premier type de graphite lamellaire constitué de lamelles de granulométrie comprise entre 10 et 100 µm et un deuxième type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur, le mélange comprenant également une poudre de polymère thermoplastique de granulométrie comprise entre 10 et 200 µm, les lamelles et/ou agglomérats ayant leurs plans principaux parallèles entre eux et parallèles aux faces principales de l'électrode.

Pour cette électrode, le premier type de graphite lamellaire peut être constitué de lamelles de granulométrie comprise entre 20 et 50 µm. Les agglomérats du deuxième type de graphité lamellaire sont avantageusement constituées de particules de 5 à 20 µm de côté et de 0,1 à 5 µm d'épaisseur. La poudre de polymère thermoplastique peut posséder une granulométrie inférieure à 50 µm. Le polymère thermoplastique est avantageusement de type fluoré, par exemple en PVDF.

De préférence, les moyens permettant la circulation d'un fluide gazeux comprennent des cannelures.

Un quatrième objet de l'invention concerne un procédé de fabrication d'une électrode pour pile à combustible comprenant des moyens permettant la circulation d'un fluide gazeux à la surface d'au moins l'une de ses faces principales, caractérisé en ce qu'il comprend :
- l'obtention d'un mélange comprenant une poudre de polymère thermoplastique de granulométrie comprise entre 10 et 200 µm, éventuellement un premier type de graphite lamellaire constitué de lamelles de granulométrie comprise entre 10 et 100 µm et un deuxième type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur,
- la mise en forme, dans un moule, de ladite électrode par frittage à haute pression du mélange afin que les plans principaux des lamelles et/ou agglomérats soient parallèles entre eux et parallèles aux faces principales de l'électrode, lesdits moyens permettant la circulation d'un fluide gazeux étant constitués lors dudit frittage à haute pression.

Selon un mode de mise en oeuvre, le deuxième type de graphite lamellaire est obtenu par broyage, en phase solide ou en phase solvant, suivi d'un tamisage, de feuilles de graphite, une dite feuille de graphite étant constituée de particules de graphite dont les plans principaux sont parallèles au plan de ladite feuille. Le broyage de feuilles de graphite peut consister à broyer des feuilles de graphite fabriquées par calandrage et/ou laminage de graphite naturel ou expansé.

Selon un autre mode de mise en oeuvre, le deuxième type de graphite lamellaire est obtenu par broyage, en phase solide ou liquide, d'une masse de graphite obtenue par compression, le broyage étant suivi d'un tamisage.

Selon encore un autre mode de mise en oeuvre, le deuxième type de graphite lamellaire est obtenu au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

L'étape de séchage peut être réalisée par filtration du solvant suivie d'un dégazage dans une enceinte sous vide.

Le frittage de l'électrode peut être effectué à une pression comprise entre 0,25 et 1 tonne/cm².

Selon un mode particulier de mise en oeuvre, le frittage de l'électrode est effectué selon le cycle suivant :
- le mélange est porté à une température légèrement inférieure à la température de fusion du polymère thermoplastique,
- le mélange est compressé graduellement jusqu'à la pression requise pour le frittage,
- le mélange compressé est porté à une température légèrement supérieure à la température de fusion du polymère thermoplastique, pendant une durée déterminée,
- le mélange compressé est ramené à une température inférieure à la température de fusion du polymère thermoplastique, pendant une durée déterminée,
- le mélange fritté est graduellement mis à température ambiante et à pression ambiante.

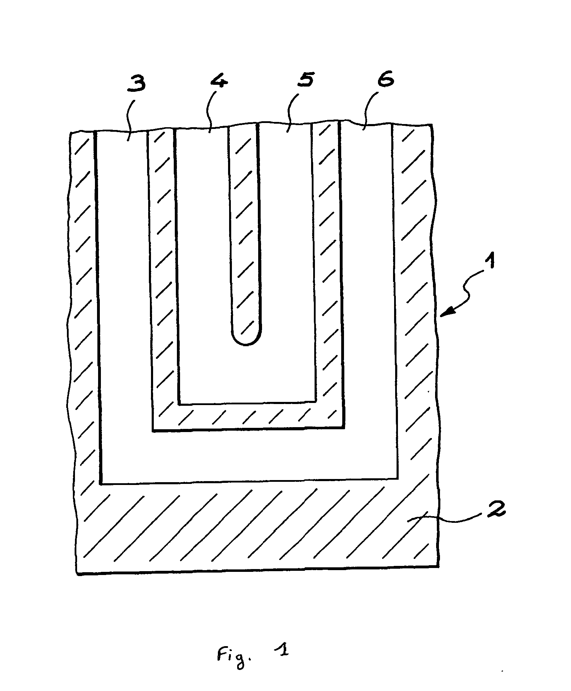

### Brève description du dessin

L'invention sera mieux comprise et d'autres avantages et particularités apparaîtront à la lecture de la description qui va suivre, donnée à titre d'exemple non limitatif, accompagnée de la figure annexée qui représente une vue partielle de l'une des faces principales d'une électrode pour pile à combustible selon la présente invention.

### Description détaillée d'un mode de réalisation de l'invention

La suite de la description portera sur la réalisation d'une électrode pour pile à combustible à partir d'un mélange comprenant un premier type de graphite lamellaire et un deuxième type de graphite lamellaire.

Le premier type de graphite possède une granulométrie comprise entre 10 et 100 µm. De préférence, la granulométrie moyenne est de 23 µm. Sa surface spécifique est comprise entre 6 et 25 m²/g et sa conductivité est de l'ordre de 1000 S/cm. On peut se procurer ce type de graphite dans le commerce.

Le deuxième type de graphite peut être constitué de particules provenant de feuilles de graphite préalablement réalisées par calandrage de graphite expansé. La densité de feuilles est de 1,1. La perméabilité à l'hélium de telles feuilles est de 10⁵ cm²/s/atm. Les feuilles de graphite sont broyées dans un solvant, ou en phase solide, pour obtenir des agglomérats de lamelles de graphite, ces agglomérats ayant entre 10 µm et 1 mm de côté, avec une majorité d'agglomérats entre 100 et 300 µm de côté, et entre 5 et 50 µm d'épaisseur.

Le deuxième type de graphite peut aussi être obtenu à partir de plaquettes de graphite exfoliées dispersées dans un solvant organique. Le taux de graphite dans le solvant est compris entre 10 et 50% en volume suivant les caractéristiques dimensionnelles du graphite (faible taux de dilution pour les graphites de grande surface spécifique, à fort taux pour les plaquettes de quelques m²/g de surface spécifique) afin d'obtenir une pâte de faible viscosité. Ce mélange est agité jusqu'à obtention d'une dispersion homogène. La pâte est ensuite séchée par filtration du solvant puis par dégazage dans une enceinte sous vide. Ces opérations peuvent avantageusement permettre de récupérer le solvant. La pâte sèche obtenue est constituée de gros agglomérats de plaquettes de graphite, les plaquettes étant en majorité superposées. Dans un agglomérat, les plaquettes sont superposées, accolées et leurs plans principaux sont en majorité parallèles. Cette pâte est ensuite concassée et tamisée afin d'obtenir des agglomérats de graphite de granulométrie comprise entre 100 µm et 1 mm.

Le deuxième type de graphite peut encore être obtenu en broyant des matériaux graphitiques solides. Le broyage s'effectue en phase solide ou liquide. La poudre obtenue est tamisée à la granulométrie spécifiée pour le deuxième type de graphite. Il est préférable d'utiliser comme matière première des masses de graphite réalisées par compression afin de disposer d'une structure de départ anisotrope.

Le mélange comprend également une poudre de polymère thermo-plastique, de granulométrie comprise entre 10 et 200 µm, de préférence de granulométrie inférieure à 50 µm. Le PVDF semble le polymère le plus intéressant pour l'invention.

Le mélange peut comprendre en poids autant de graphite du premier type que de graphite du deuxième type. Le taux de charge en graphite peut être très élevé, entre 70 et 85 % en volume.

Les constituants du mélange sont préalablement séchés puis mélangés au turbulat. La formulation est homogénéisée sur une plaque vibrante.

La mise en forme du matériau composite conducteur peut se faire au moyen d'un moule dans lequel le mélange est fritté à haute pression.

Le mélange contenu dans le moule est porté à une température légèrement inférieure à la température de fusion du polymère (par exemple à 20°C en dessous de la température de fusion). Il est ensuite graduellement compressé jusqu'à une pression comprise entre 0,25 et 1 tonne/cm². La température du mélange est alors élevée légèrement au-dessus du point de fusion du polymère (par exemple 20°C au-dessus) pendant 10 minutes. Le mélange est ensuite refroidi sous pression jusqu'à une température inférieure de 40°C à la température de fusion du polymère. Le mélange fritté est ensuite graduellement mis à température ambiante et à pression ambiante.

La pression exercée sur le mélange est uniaxiale. Le matériau obtenu possède une structure très anisotrope, les lamelles de graphite s'orientant dans une direction perpendiculaire à la direction de pressage et l'opération de frittage n'impliquant pas de transport de matière dans le moule.

Ce procédé permet en particulier de réaliser des canaux d'alimentation en gaz dans des électrodes de pile à combustible.

La figure annexée montre, de façon partielle, l'une des faces principales d'une électrode pour pile à combustible selon la présente invention. La face principale 2 de l'électrode (ou plaque bipolaire) 1 comporte des cannelures 3, 4, 5 et 6 reliées entre elles de façon à permettre la circulation d'un fluide gazeux sur la face 2 de l'électrode.

Le matériau composite conducteur selon la présente invention possède une structure en strates, les lamelles ou agglomérats de graphite ayant leur plan principal parallèle à des faces principales du matériau mis sous forme d'électrode. Il en découle une conductivité électrique anisotrope. Cette conductivité peut varier de 1 à 30 S/cm dans une direction transversale au plan de l'électrode (direction de pressage) en fonction du taux de charge et de la pression lors du frittage. Dans une direction parallèle au plan de l'électrode (c'est-à-dire une direction perpendiculaire à la direction de pressage) la conductivité peut varier entre 50 et 200 S/cm.

Une électrode conçue selon la présente invention possède une conductivité thermique également anisotrope. Elle est nettement supérieure dans une direction parallèle à la surface que dans une direction transversale. Dans le cas d'une électrode pour pile à combustible, ceci permet d'optimiser le refroidissement de la pile.

Le premier type de graphite et le deuxième type de graphite procurent une bonne conductivité superficielle et favorisent le refroidissement d'une électrode. Le deuxième type de graphite permet d'obtenir une très bonne imperméabilité aux gaz, notamment à l'hélium et à l'hydrogène. La perméabilité au gaz du deuxième type de graphite est inférieure à celle des particules de graphite de l'art connu. De plus, les dimensions importantes des agglomérats constituant le deuxième type de graphite (plusieurs centaines de µm de côté) augmentent la tortuosité du matériau composite.

Le tableau ci-dessous compare différents matériaux composites sous forme de plaques : une plaque de graphite pyrolisée, une plaque composite à base du premier type de graphite et une plaque composite à base du deuxième type de graphite.

| Matériau | Perméation à l'hélium (m³.m/m²/Pa/s) |
|---|---|
| Plaque de graphite pyrolisée | 10⁻¹⁷ |
| Plaque composite à base du premier type de graphite | 10⁻¹⁵ |
| Plaque composite à base du deuxième type de graphite | 10⁻¹⁸ |

## Revendications

1. Matériau composite conducteur constitué d'un mélange fritté à haute pression de graphite lamellaire et de poudre de polymère thermoplastique, **caractérisé en ce que** le mélange comprend un type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur, le mélange comprenant également une poudre de polymère thermoplastique de granulométrie comprise entre 10 et 200 µm.

2. Matériau composite conducteur selon la revendication 1, **caractérisé en ce que** le mélange comprend en outre un autre type de graphite lamellaire constitué de lamelles de granulométrie comprise entre 10 et 100 µm, les lamelles et les agglomérats ayant leurs plans principaux parallèles entre eux.

3. Matériau composite conducteur selon la revendication 2, **caractérisé en ce que** l'autre type de graphite lamellaire est constitué de lamelles de granulométrie comprise entre 20 et 50 µm.

4. Matériau composite conducteur selon l'une quelconque des revendications 1 à 3, **caractérisé en ce que** les agglomérats sont constitués de particules de 5 à 20 µm de côté et de 0,1 à 5 µm d'épaisseur.

5. Matériau composite conducteur selon l'une quelconque des revendications 1 à 4, **caractérisé en ce que** la poudre de polymère thermoplastique possède une granulométrie inférieure à 50 µm.

6. Matériau composite conducteur selon l'une quelconque des revendications 1 à 5, **caractérisé en ce que** le polymère thermoplastique est de type fluoré.

7. Matériau composite conducteur selon la revendication 6, **caractérisé en ce que** le polymère thermoplastique est du PVDF.

8. Procédé de fabrication d'un matériau composite conducteur, **caractérisé en ce qu'**il comprend :
- l'obtention d'un mélange comprenant une poudre de polymère thermoplastique de granulométrie comprise entre 10 et 200 um, un type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur,
- la mise en forme du matériau composite conducteur par frittage à haute pression du mélange afin que les plans principaux des agglomérats soient parallèles entre eux.

9. Procédé selon la revendication 8, **caractérisé en ce que** le mélange comprend en outre un autre type de graphite lamellaire constitué de lamelles de granulométrie comprise entre 10 et 100 µm, l'étape de mise en forme disposant les plans principaux des lamelles et des agglomérats parallèlement entre eux.

10. Procédé selon la revendication 9, **caractérisé en ce que** les agglomérats sont obtenus par broyage, en phase solide ou en phase solvant, suivi d'un tamisage, de feuilles de graphite, une dite feuille de graphite étant constituée de particules de graphite dont les plans principaux sont parallèles au plan de ladite feuille.

11. Procédé selon la revendication 10, **caractérisé en ce que** le broyage de feuilles de graphite consiste à broyer des feuilles de graphite fabriquées par calandrage et/ou laminage de graphite naturel ou expansé.

12. Procédé selon la revendication 8, **caractérisé en ce que** les agglomérats sont obtenus par broyage, en phase solide ou liquide, d'une masse de graphite obtenue par compression, le broyage étant suivi d'un tamisage.

13. Procédé selon la revendication 8, **caractérisé en ce que** les agglomérats sont obtenus au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

14. Procédé selon la revendication 13, **caractérisé en ce que** l'étape de séchage est réalisée par filtration du solvant suivie d'un dégazage dans une enceinte sous vide.

15. Procédé selon l'une quelconque des revendications 8 à 14, **caractérisé en ce que** la mise en forme du matériau composite conducteur est effectuée dans un moule.

16. Procédé selon l'une quelconque des revendications 8 à 15, **caractérisé en ce que** le frittage est effectué à une pression comprise entre 0,25 et 1 tonne/cm².

17. Procédé selon l'une quelconque des revendications 8 à 16, **caractérisé en ce que** le frittage est effectué selon le cycle suivant :
- le mélange est porté à une température légèrement inférieure à la température de fusion du polymère thermoplastique,
- le mélange est compressé graduellement jusqu'à la pression requise pour le frittage,
- le mélange compressé est porté à une température légèrement supérieure à la température de fusion du polymère thermoplastique, pendant une durée déterminée,
- le mélange compressé est ramené à une température inférieure à la température de fusion du polymère thermoplastique, pendant une durée déterminée,
- le mélange fritté est graduellement mis à température ambiante et à pression ambiante.

18. Electrode (1) pour pile à combustible, comprenant des moyens (3, 4, 5, 6) permettant la circulation d'un fluide gazeux à la surface d'au moins l'une (2) de ses faces principales, obtenue par frittage à haute pression d'un mélange de graphite lamellaire et de poudre de polymère thermoplastique, le mélange comprenant un type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur, le mélange comprenant également une poudre de polymère thermoplastique de granulométrie comprise entre 10 et 200 µm, les agglomérats ayant leurs plans principaux parallèles entre eux et parallèles aux faces principales de l'électrode.

19. Electrode (1) pour pile à combustible selon la revendication 18, **caractérisé en ce que** le mélange comprend en outre un autre type de graphite lamellaire constitué de lamelles de granulométrie comprise entre 10 et 100 µm, les lamelles et les agglomérats ayant leurs plans principaux parallèles entre eux.

20. Electrode (1) pour pile à combustible selon la revendication 19, **caractérisée en ce que** l'autre type de graphite lamellaire est constitué de lamelles de granulométrie comprise entre 20 et 50 µm.

21. Electrode (1) pour pile à combustible selon l'une des revendications 18 à 20, **caractérisée en ce que** les agglomérats sont constitués de particules de 5 à 20 µm de côté et de 0,1 à 5 µm d'épaisseur.

22. Electrode (1) pour pile à combustible selon l'une quelconque des revendications 18 à 21, **caractérisée en ce que** la poudre de polymère thermoplastique possède une granulométrie inférieure à 50 µm.

23. Electrode (1) pour pile à combustible selon l'une quelconque des revendications 18 à 22, **caractérisée en ce que** le polymère thermoplastique est du type fluoré.

24. Electrode (1) pour pile à combustible selon la revendication 23, **caractérisée en ce que** le polymère thermoplastique est du PVDF.

25. Electrode (1) pour pile à combustible selon l'une quelconque des revendications 18 à 24, **caractérisée en ce que** lesdits moyens permettant la circulation d'un fluide gazeux comprennent des cannelures (3,4,5,6).

26. Procédé de fabrication d'une électrode (1) pour pile à combustible comprenant des moyens (3, 4, 5, 6) permettant la circulation d'un fluide gazeux à la surface d'au moins l'une (2) de ses faces principales, **caractérisé en ce qu'**il comprend :
- l'obtention d'un mélange comprenant une poudre de polymère thermoplastique de granulométrie comprise entre 10 et 200 µm et un type de graphite lamellaire constitué d'agglomérats de particules de graphite liées et superposées entre elles de façon que leurs plans principaux soient parallèles entre eux, ces agglomérats présentant une anisotropie planaire et ayant entre 10 µm et 1 mm de côté et entre 5 et 50 µm d'épaisseur,
- la mise en forme, dans un moule, de ladite électrode par frittage à haute pression du mélange afin que les plans principaux des agglomérats soient parallèles entre eux et parallèles aux faces principales de l'électrode, lesdits moyens permettant la circulation d'un fluide gazeux étant constitués lors dudit frittage à haute pression.

27. Procédé de fabrication d'une électrode (1) pour pile à combustible selon la revendication 26, **caractérisé en ce que** le mélange comprend en outre un autre type de graphite lamellaire constitué de lamelles de granulométrie comprise entre 10 et 100 pm, les lamelles et les agglomérats ayant leurs plans principaux parallèles entre eux suite à la mise en forme de ladite électrode.

28. Procédé de fabrication d'une électrode (1) pour pile à combustible selon la revendication 27, **caractérisé en ce que** le type de graphite lamellaire constitué d'agglomérats est obtenu par broyage, en phase solide ou en phase solvant, suivi d'un tamisage, de feuilles de graphite, une dite feuille de graphite étant constituée de particules de graphite dont les plans principaux sont parallèles au plan de ladite feuille.

29. Procédé de fabrication d'une électrode (1) pour pile à combustible selon la revendication 28, **caractérisé en ce que** le broyage de feuilles de graphite consiste à broyer des feuilles de graphite fabriquées par calandrage et/ou laminage de graphite naturel ou expansé.

30. Procédé de fabrication d'une électrode (1) pour pile à combustible selon la revendication 26, **caractérisé en ce que** le type de graphite lamellaire constitué d'agglomérats est obtenu par broyage, en phase solide ou liquide, d'une masse de graphite obtenue par compression, le broyage étant suivi d'un tamisage.

31. Procédé de fabrication d'une électrode (1) pour pile à combustible selon la revendication 26, **caractérisé en ce que** le type de graphite lamellaire constitué d'agglomérats est obtenu au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

32. Procédé de fabrication d'une électrode (1) pour pile à combustible selon la revendication 31, **caractérisé en ce que** l'étape de séchage est réalisée par filtration du solvant suivie d'un dégazage dans une enceinte sous vide.

33. Procédé de fabrication d'une électrode (1) pour pile à combustible selon l'une quelconque des revendications 26 à 32, **caractérisé en ce que** le frittage est effectué à une pression comprise entre 0,25 et 1 tonne/cm².

34. Procédé de fabrication d'une électrode (1) pour pile à combustible selon l'une quelconque des revendications 26 à 33, **caractérisé en ce que** le frittage est effectué selon le cycle suivant :
- le mélange est porté à une température légèrement inférieure à la température de fusion du polymère thermoplastique,
- le mélange est compressé graduellement jusqu'à la pression requise pour le frittage,
- le mélange compressé est porté à une température légèrement supérieure à la température de fusion du polymère thermoplastique, pendant une durée déterminée,
- le mélange compressé est ramené à une température inférieure à la température de fusion du polymère thermoplastique, pendant une durée déterminée,
- le mélange fritté est graduellement mis à température ambiante et à pression ambiante.

## Patentansprüche

1. Leitfähiges Verbundmaterial aus einem mit hohem Druck gesinterten Gemisch von blättchenförmigem Graphit und einem Pulver eines thermoplastischen Polymers, **dadurch gekennzeichnet, dass** das Gemisch eine Art eines blättchenförmigen Graphits umfasst, die aus Agglomeraten von Graphitteilchen, die untereinander derart verbunden und überlagert sind, dass ihre Hauptflächen zueinander parallel sind, besteht, wobei diese Agglomerate eine Planaranisotropie aufweisen und eine Seitenlänge zwischen 10 µm und 1 mm und eine Dicke zwischen 5 und 50 µm aufweisen, wobei das Gemisch auch ein Pulver eines thermoplastischen Polymers einer Korngrößenverteilung zwischen 10 und 200 µm umfasst.

2. Leitfähiges Verbundmaterial nach Anspruch 1, **dadurch gekennzeichnet, dass** das Gemisch ferner eine andere Art eines blättchenförmigen Graphits aufweist, die aus Blättchen einer Korngrößenverteilung zwischen 10 und 100 µm besteht, wobei die Blättchen und die Agglomerate zueinander parallele Hauptflächen aufweisen.

3. Leitfähiges Verbundmaterial nach Anspruch 2, **dadurch gekennzeichnet, dass** die andere Art eines blättchenförmigen Graphits aus Blättchen einer Korngrößenverteilung zwischen 20 und 50 µm besteht.

4. Leitfähiges Verbundmaterial nach einem der Ansprüche 1 bis 3, **dadurch gekennzeichnet, dass** die Agglomerate aus Teilchen einer Seitenlänge von 5 bis 20 µm und einer Dicke von 0,1 bis 5 µm bestehen.

5. Leitfähiges Verbundmaterial nach einem der Ansprüche 1 bis 4, **dadurch gekennzeichnet, dass** das Pulver eines thermoplastischen Polymers eine geringere Korngrößenverteilung als 50 µm aufweist.

6. Leitfähiges Verbundmaterial nach einem der Ansprüche 1 bis 5, **dadurch gekennzeichnet, dass** das thermoplastische Polymer ein fluoriertes ist.

7. Leitfähiges Verbundmaterial nach Anspruch 6, **dadurch gekennzeichnet, dass** das thermoplastische Polymer ein PVDF ist.

8. Verfahren zur Herstellung eines leitfähigen Verbundmaterials, **dadurch gekennzeichnet, dass** es umfasst:
- Bereitstellen eines Gemischs, das ein Pulver eines thermoplastischen Polymers einer Korngrößenverteilung zwischen 10 und 200 µm, eine Art eines blättchenförmigen Graphits, die aus Agglomeraten von Graphitteilchen, die untereinander derart verbunden und überlagert sind, dass ihre Hauptflächen zueinander parallel sind, besteht, umfasst, wobei diese Agglomerate eine Planaranisotropie aufweisen und eine Seitenlänge zwischen 10 µm und 1 mm und eine Dicke zwischen 5 und 50 µm aufweisen,
- Formen des leitfähigen Verbundmaterials durch Sintern des Gemischs unter hohem Druck, so dass die Hauptflächen der Agglomerate zueinander parallel sind.

9. Verfahren nach Anspruch 8, **dadurch gekennzeichnet, dass** das Gemisch ferner eine andere Art eines blättchenförmigen Graphits, die aus Blättchen einer Korngrößenverteilung zwischen 10 und 100 µm besteht, umfasst, wobei die Stufe des Formens die Hauptflächen der Blättchen und der Agglomerate zueinander parallel anordnet.

10. Verfahren nach Anspruch 9, **dadurch gekennzeichnet, dass** die Agglomerate durch Zerkleinern in einer Feststoffphase oder einer Lösemittelphase und ein nachfolgendes Sieben von Graphitblättern erhalten werden, wobei ein sogenanntes Graphitblatt aus Graphitteilchen besteht, deren Hauptflächen parallel zur Fläche des Blatts sind.

11. Verfahren nach Anspruch 10, **dadurch gekennzeichnet, dass** das Zerkleinern von Graphitblättern darin besteht, Graphitblätter, die durch Kalandrieren und/oder Walzen von natürlichem oder expandiertem Graphit hergestellt wurden, zu mahlen.

12. Verfahren nach Anspruch 8, **dadurch gekennzeichnet, dass** die Agglomerate durch Zerkleinern einer durch Kompression erhaltenen Graphitmasse im festen oder flüssigen Zustand erhalten werden, wobei auf das Zerkleinern ein Sieben folgt.

13. Verfahren nach Anspruch 8, **dadurch gekennzeichnet, dass** die Agglomerate mittels der im Folgenden angegebenen Stufen erhalten werden:
- Dispergieren von Graphitplättchen, die abgeschiefert oder durch Zerkleinern von Graphitblättern erhalten wurden, in einem organischen Lösemittel, bis eine homogene Paste erhalten wird,
- Trocknen der erhaltenen homogenen Paste,
- Grobzerkleinern der getrockneten Paste, um Agglomerate von Graphitteilchen zu erhalten,
- Sieben der Agglomerate von Graphitteilchen.

14. Verfahren nach Anspruch 13, **dadurch gekennzeichnet, dass** die Stufe des Trocknens durch Abfiltrieren vom Lösemittel und ein nachfolgendes Entgasen in einem Vakuumbehälter durchgeführt wird.

15. Verfahren nach einem der Ansprüche 8 bis 14, **dadurch gekennzeichnet, dass** das Formen des leitfähigen Verbundmaterials in einer Form durchgeführt wird.

16. Verfahren nach einem der Ansprüche 8 bis 15, **dadurch gekennzeichnet, dass** das Sintern mit einem Druck zwischen 0,25 und 1 t/cm² durchgeführt wird.

17. Verfahren nach einem der Ansprüche 8 bis 16, **dadurch gekennzeichnet, dass** das Sintern nach dem folgenden Zyklus durchgeführt wird:
- das Gemisch wird auf eine Temperatur gebracht, die etwas unterhalb der Schmelztemperatur des thermoplastischen Polymers liegt,
- das Gemisch wird schrittweise bis zu dem für das Sintern erforderlichen Druck komprimiert,
- das komprimierte Gemisch wird über eine vorgegebene Zeitdauer auf eine Temperatur gebracht, die leicht oberhalb der Schmelztemperatur des thermoplastischen Polymers liegt,
- das komprimierte Gemisch wird über eine vorgegebene Zeitdauer auf eine Temperatur gebracht, die unter der Schmelztemperatur des thermoplastischen Polymers liegt,
- das gesinterte Gemisch wir schrittweise auf Umgebungstemperatur und Umgebungsdruck gebracht.

18. Elektrode (1) für eine Brennstoffzelle, die Mittel (3, 4, 5, 6) umfasst, die die Zirkulation eines gasförmigen Fluids auf der Oberfläche von mindestens einer (2) von deren Hauptflächen ermöglichen, wobei die Elektrode durch Sintern eines Gemischs von blättchenförmigem Graphit und einem Pulver eines thermoplastischen Polymers mit hohem Druck erhalten wurde, wobei das Gemisch eine Art eines blättchenförmigen Graphits umfasst, die aus Agglomeraten von Graphitteilchen, die untereinander derart verbunden und überlagert sind, dass ihre Hauptflächen zueinander parallel sind, besteht, wobei diese Agglomerate eine Planaranisotropie aufweisen und eine Seitenlänge zwischen 10 µm und 1 mm und eine Dicke zwischen 5 und 50 µm aufweisen, wobei das Gemisch auch ein Pulver eines thermoplastischen Polymers einer Korngrößenverteilung zwischen 10 und 200 µm umfasst, wobei die Agglomerate Hauptflächen aufweisen, die untereinander und zu den Hauptflächen der Elektrode parallel sind.

19. Elektrode (1) für eine Brennstoffzelle nach Anspruch 18, **dadurch gekennzeichnet, dass** das Gemisch ferner eine andere Art eines blättchenförmigen Graphits, die aus Blättchen einer Korngrößenverteilung zwischen 10 und 100 µm besteht, umfasst, wobei die Blättchen und die Agglomerate zueinander parallele Hauptflächen aufweisen.

20. Elektrode (1) für eine Brennstoffzelle nach Anspruch 19, **dadurch gekennzeichnet, dass** die andere Art eines blättchenförmigen Graphits aus Blättchen einer Korngrößenverteilung zwischen 20 und 50 µm besteht.

21. Elektrode (1) für eine Brennstoffzelle nach einem der Ansprüche 18 bis 20, **dadurch gekennzeichnet, dass** die Agglomerate aus Teilchen einer Seitenlänge von 5 bis 20 µm und einer Dicke von 0,1 bis 5 µm bestehen.

22. Elektrode (1) für eine Brennstoffzelle nach einem der Ansprüche 18 bis 21, **dadurch gekennzeichnet, dass** das Pulver eines thermoplastischen Polymers eine geringere Korngrößenverteilung als 50 µm aufweist.

23. Elektrode (1) für eine Brennstoffzelle nach einem der Ansprüche 18 bis 22, **dadurch gekennzeichnet, dass** das thermoplastische Polymer ein fluoriertes ist.

24. Elektrode (1) für eine Brennstoffzelle nach Anspruch 23, **dadurch gekennzeichnet, dass** das thermoplastische Polymer ein PVDF ist.

25. Elektrode (1) für eine Brennstoffzelle nach einem der Ansprüche 18 bis 24, **dadurch gekennzeichnet, dass** die Mittel, die die Zirkulation eines gasförmigen Fluids ermöglichen, Rillen (3, 4, 5, 6) umfassen.

26. Verfahren zur Herstellung einer Elektrode (1) für eine Brennstoffzelle, die Mittel (3, 4, 5, 6) umfasst, die die Zirkulation eines gasförmigen Fluids an der Oberfläche von mindestens einer (2) von deren Hauptflächen ermöglichen, **dadurch gekennzeichnet, dass** das Verfahren umfasst:
- Bereitstellen eines Gemischs, das ein Pulver eines thermoplastischen Polymers einer Korngrößenverteilung zwischen 10 und 200 µm und eine Art eines blättchenförmigen Graphits, die aus Agglomeraten von Graphitteilchen, die untereinander derart verbunden und überlagert sind, dass ihre Hauptflächen zueinander parallel sind, besteht, umfasst, wobei diese Agglomerate eine Planaranisotropie aufweisen und eine Seitenlänge zwischen 10 µm und 1 mm und eine Dicke zwischen 5 und 50 µm aufweisen,
- Formen der Elektrode durch Sintern des Gemischs mit hohem Druck in einer Form, so dass die Hauptflächen der Agglomerate parallel zueinander und zu den Hauptflächen der Elektrode sind, wobei die Mittel, die die Zirkulation eines gasförmigen Fluids ermöglichen, während des Sinterns mit hohem Druck gebildet werden.

27. Verfahren zur Herstellung einer Elektrode (1) für eine Brennstoffzelle nach Anspruch 26, **dadurch gekennzeichnet, dass** das Gemisch ferner eine andere Art eines blättchenförmigen Graphits, die aus Blättchen einer Korngrößenverteilung zwischen 10 und 100 µm besteht, umfasst, wobei die Blättchen und die Agglomerate ihre zueinander parallelen Hauptflächen infolge des Formens der Elektrode aufweisen.

28. Verfahren zur Herstellung einer Elektrode (1) für eine Brennstoffzelle nach Anspruch 27, **dadurch gekennzeichnet, dass** die aus Agglomeraten bestehende Art eines blättchenförmigen Graphits durch Zerkleinern in einer Feststoffphase oder einer Lösemittelphase und nachfolgendes Sieben von Graphitblättern erhalten wird, wobei ein sogenanntes Graphitblatt aus Graphitteilchen besteht, deren Hauptflächen parallel zur Fläche des Blattes sind.

29. Verfahren zur Herstellung einer Elektrode (1) für eine Brennstoffzelle nach Anspruch 28, **dadurch gekennzeichnet, dass** das Zerkleinern von Graphitblättern darin besteht, Graphitblätter, die durch Kalandrieren und/oder Walzen von natürlichem oder expandiertem Graphit hergestellt wurden, zu mahlen.

30. Verfahren zur Herstellung einer Elektrode (1) für eine Brennstoffzelle nach Anspruch 26, **dadurch gekennzeichnet, dass** die aus Agglomeraten bestehende Art eines blättchenförmigen Graphits durch Zerkleinern einer durch Kompression erhaltenen Graphitmasse in flüssiger oder fester Phase erhalten wird, wobei auf das Zerkleinern ein Sieben folgt.

31. Verfahren zur Herstellung einer Elektrode (1) für eine Brennstoffzelle nach Anspruch 26, **dadurch gekennzeichnet, dass** die aus Agglomeraten bestehende Art eines blättchenförmigen Graphits mittels der folgenden Stufen erhalten wird:
- Dispergieren von Graphitplättchen, die abgeschiefert oder durch Zerkleinern von Graphitblättern erhalten wurden, in einem organischen Lösemittel, bis eine homogene Paste erhalten wird,
- Trocknen der erhaltenen homogenen Paste,
- Grobzerkleinern der getrockneten Paste, um Agglomerate von Graphitteilchen zu erhalten,
- Sieben der Agglomerate von Graphitteilchen.

32. Verfahren zur Herstellung einer Elektrode (1) für eine Brennstoffzelle nach Anspruch 31, **dadurch gekennzeichnet, dass** die Stufe des Trocknens durch Abfiltration vom Lösemittel und nachfolgendes Entgasen in einem Vakuumbehälter durchgeführt wird.

33. Verfahren zur Herstellung einer Elektrode (1) für eine Brennstoffzelle nach einem der Ansprüche 26 bis 32, **dadurch gekennzeichnet, dass** das Sintern mit einem Druck zwischen 0,25 und 1 t/cm² durchgeführt wird.

34. Verfahren zur Herstellung einer Elektrode (1) für eine Brennstoffzelle nach einem der Ansprüche 26 bis 33, **dadurch gekennzeichnet, dass** das Sintern nach dem folgenden Zyklus durchgeführt wird:
- das Gemisch wird auf eine Temperatur gebracht, die etwas unterhalb der Schmelztemperatur des thermoplastischen Polymers liegt,
- das Gemisch wird schrittweise bis zu dem für das Sintern erforderlichen Druck komprimiert,
- das komprimierte Gemisch wird über eine vorgegebene Zeitdauer auf eine Temperatur gebracht, die leicht oberhalb der Schmelztemperatur des thermoplastischen Polymers liegt,
- das komprimierte Gemisch wird über eine vorgegebene Zeitdauer auf eine Temperatur gebracht, die unter der Schmelztemperatur des thermoplastischen Polymers liegt,
- das gesinterte Gemisch wir schrittweise auf Umgebungstemperatur und Umgebungsdruck gebracht.

## Claims

1. Composite conducting material comprised of a mixture of flake graphite and thermoplastic polymer powder sintered at high pressure, **characterized in that** the mixture comprises a type of flake graphite comprising clusters of graphite particles bonded and superimposed on each other in such a fashion that their principal planes are parallel to each other, these clusters exhibiting a planar anisotropy and having between 10 µm and 1 mm in length and being between 5 and 50 µm in thickness, the mixture also comprising a thermoplastic polymer powder having a granulometry of between 10 and 200 µm.

2. Composite conducting material according to claim 1, **characterized in that** the mixture further comprises another type of flake graphite comprised of flakes having a granulometry of between 10 and 100 µm, the flakes and the clusters having their principal planes parallel to each other.

3. Composite conducting material according to claim 2, **characterized in that** the another type of flake graphite is comprised of flakes having a granulometry of between 20 and 50 µm.

4. Composite conducting material according to any one of claims 1-3, **characterized in that** the clusters are comprised of particles of 5 to 20 µm in length and 0,1 to 5 µm in thickness.

5. Composite conducting material according to any one of claims 1-4, **characterized in that** the thermoplastic polymer powder has a granulometry of less than 50 µm.

6. Composite conducting material according to any one of claims 1-5, **characterized in that** the thermoplastic polymer is a fluorinated type.

7. Composite conducting material according to claim 6, **characterized in that** the thermoplastic polymer is PVDF.

8. A method for manufacturing a composite conducting material, comprising:
- obtaining a mixture comprising a thermoplastic polymer powder having a granulometry of between 10 and 200 µm, a type of flake graphite comprising clusters of graphite particles bonded and superimposed on each other in such a fashion that their principal planes are parallel to each other, these clusters exhibiting a planar anisotropy and having between 10 µm and 1 mm in length and being between 5 and 50 µm in thickness;
- shaping the composite conducting material by sintering the mixture at high pressure in order that the principal planes of the clusters are parallel to each other.

9. Method according to claim 8, **characterized in that** the mixture further comprises another type of flake graphite comprised of flakes having a granulometry of between 10 and 100 µm, the shaping arranging the principal planes of the flakes and the clusters parallel to each other.

10. Method according to claim 9, **characterized in that** the clusters are obtained by grinding, in solid or solvent phase, followed by screening, of sheets of graphite, one such graphite sheet being comprised of graphite particles whose principal planes are parallel to the plane of said sheet.

11. Method according to claim 10, **characterized in that** the grinding of the graphite sheets consists of grinding graphite sheets manufactured by calendering and/or laminating of natural or expanded graphite.

12. Method according to claim 8, **characterized in that** the clusters are obtained by grinding, in the solid or liquid phase, of a graphite mass obtained by compression, said grinding being followed by screening.

13. Method according to claim 8, **characterized in that** the clusters obtained by means of the following steps:
- dispersion of platelets of graphite exfoliated or obtained by grinding of graphite sheets in an organic solvent until obtaining a uniform paste;
- drying of the uniform paste so obtained;
- crushing of the dried paste in order to obtain clusters of graphite particles;
- screening of the clusters of graphite particles.

14. Method according to claims 13, **characterized in that** the drying step is realized by filtration of the solvent followed by degassing in a container under vacuum.

15. Method according to any one of claims 8-14, **characterized in that** the shaping of the composite conducting material is done in a mold.

16. Method according to any one of claims 8-15, **characterized in that** sintering is done at a pressure of between 0.25 and 1 ton/cm².

17. A method according to any one of claims 8-16, **characterized in that** sintering is done according to the following cycle:
- the mixture is brought to a temperature slightly below the melting point of the thermoplastic polymer;
- the mixture is gradually compressed to the pressure required for sintering;
- the compressed mixture is brought to a temperature slightly higher than the melting point of the thermoplastic polymer over a determined period of time;
- the compressed mixture is brought back to a temperature lower than the melting point of the thermoplastic polymer over a determined period of time;
- the sintered mixture is gradually brought to room temperature and ambient pressure.

18. Electrode (1) for a fuel cell, comprising means (3, 4, 5, 6) enabling the circulation of a gaseous fluid at a surface of at least one (2) of its principal surfaces, obtained by sintering a mixture of flake graphite and a thermoplastic polymer powder at high pressure, the mixture comprising a type of flake graphite comprising clusters of graphite particles bonded and superimposed on each other in such a fashion that their principal planes are parallel to each other, these clusters exhibiting a planar anisotropy and having between 10 µm and 1 mm in length and being between 5 and 50 µm in thickness, the mixture also comprising a thermoplastic polymer powder having a granulometry of between 10 and 200 µm, the clusters having their principal planes parallel to each other and parallel to the principal surfaces of the electrode.

19. Electrode (1) for a fuel cell according to claim 18, **characterized in that** the mixture further comprises another type of flake graphite comprised of flakes having a granulometry of between 10 and 100 µm, the flakes and the clusters having their principal planes parallel to each other.

20. Electrode (1) for a fuel cell according to claim 19, **characterized in that** the another type of flake graphite is comprised of flakes having a granulometry of between 20 and 50 µm.

21. Electrode (1) for a fuel cell according to any one of claims 18-20, **characterized in that** the clusters are comprised of particles of 5 to 20 µm in length and 0.1 to 5 µm in thickness.

22. Electrode (1) for a fuel cell according to any one of claims 18-21, **characterized in that** the thermoplastic polymer powder has a granulometry of less than 50 µm.

23. Electrode (1) for a fuel cell according to any one of claims 18-22, **characterized in that** the thermoplastic polymer is a fluorinated type.

24. Electrode (1) for a fuel cell according to claim 23, **characterized in that** the thermoplastic polymer is PVDF.

25. Electrode (1) for a fuel cell according to any one of claims 18-24, **characterized in that** said means enabling circulation of a gaseous fluid comprise channels (3, 4, 5, 6).

26. Method for manufacturing an electrode (1) for a fuel cell comprising means (3, 4, 5, 6) enabling the circulation of a gaseous fluid at the surface of at least one (2) of its principal surfaces, comprising:
- obtaining a mixture comprising a thermoplastic polymer powder having a granulometry of between 10 and 200 µm, and a type of flake graphite comprising clusters of graphite particles bonded and superimposed on each other in such a fashion that their principal planes are parallel to each other, these clusters exhibiting a planar anisotropy and having between 10 µm and 1 mm in length and being between 5 and 50 µm in thickness;
- shaping in a mold of said electrode by sintering at high pressure of the mixture in order that the principal planes of the clusters are parallel to each other and parallel to the principal surfaces of the electrode, said means enabling the circulation of a gaseous fluid being formed at the time of said high-pressure sintering.

27. Method for manufacturing an electrode (1) for a fuel cell according to claim 26, **characterized in that** the mixture further comprises another type of flake graphite comprised of flakes having a granulometry of between 10 and 100 µm, the flakes and the clusters having their principal planes parallel to each other further to shaping of said electrode.

28. Method for manufacturing an electrode (1) for a fuel cell according to claim 27, **characterized in that** wherein the type of flake graphite comprising clusters is obtained by grinding, in the solid phase or the solvent phase, followed by screening, of sheets of graphite, a so-called graphite sheet being comprised of particles of graphite whose principal planes are parallel to the plane of said sheet.

29. Method for manufacturing an electrode (1) for a fuel cell according to claim 28, **characterized in that** the grinding of the graphite sheets comprises grinding of graphite sheets produced by calendaring and/or laminating of natural or expanded graphite.

30. Method for manufacturing an electrode (1) for a fuel cell according to claim 26, **characterized in that** the type of flake graphite comprising clusters is obtained by grinding, in the solid phase or liquid phase, of a graphite mass obtained by compression, said grinding being followed by screening.

31. Method for manufacturing an electrode (1) for a fuel cell according to claim 26, **characterized in that** the type of flake graphite comprising clusters is obtained by means of the following steps:
- dispersion of platelets of graphite exfoliated or obtained by grinding graphite sheets in an organic solvent until obtaining a uniform paste;
- drying of the uniform paste so obtained;
- crushing of the dried paste in order to obtain clusters of graphite particles;
- screening of the clusters of graphite particles.

32. Method for manufacturing an electrode (1) for a fuel cell according to claim 31, **characterized in that** drying step is done by filtration of the solvent followed by degassing in a container under vacuum.

33. Method for manufacturing an electrode (1) for a fuel cell according to any one of claims 26-32, **characterized in that** the sintering is done at a pressure between 0.25 and 1 ton/cm².

34. Method for manufacturing an electrode (1) for a fuel cell according to any one of claims 26-33, **characterized in that** the sintering is done according to the following cycle:
- the mixture is brought to a temperature slightly below the melting point of the thermoplastic polymer;
- the mixture is gradually compressed to the pressure required for sintering;
- the compressed mixture is brought to a temperature slightly higher that the melting point of the thermoplastic polymer over a determined period of time;
- the compressed mixture is brought back down to a temperature below the melting point of the thermoplastic polymer over a determined period of time;
- the sintered mixture is gradually brought to room temperature and ambient pressure.
